# EUROPEAN PATENT SPECIFICATION

(11) **EP 0 453 501 B1**
(45) Date of publication and mention of the grant of the patent: **09.04.1997**
(21) Application number: 90902528.0
(22) Date of filing: 11.01.1990
(51) Int. Cl.: G02B 6/28, B29D 11/00

(54) **INJECTION MOLDED STAR-COUPLERS AND METHODS OF MAKING SAME**
DURCH EINSPRITZGIESSFORMUNG ERZEUGTE STERNKOPPLER UND VERFAHREN ZUR HERSTELLUNG
COUPLEURS EN ETOILE MOULES PAR INJECTION ET PROCEDES DE FABRICATION

(30) Priority: 12.01.1989 US 297009
(43) Date of publication of application: 30.10.1991
(73) Proprietor: CODENOLL TECHNOLOGY CORPORATION, Yonkers, NY 10701 (US)
(72) Inventor: CODEN, Michael, H., Riverdale NY 10463 (US); DUTT, Bulusu, V., Yorktown Heights, NY 10598 (US)
(74) Representative: Jones, Andrée Zena
(86) International application number: US9000228
(87) International publication number: WO9008030

(56) References cited:
- EP-A- 0 174 014
- EP-A- 0 219 096
- FR-A- 2 299 656
- JP-A- 6 261 012
- JP-A-55 120 004
- JP-A-57 197 512
- JP-A-58 149 008
- JP-A-59 232 312
- US-A- 3 227 535
- US-A- 3 498 864
- US-A- 4 008 061
- US-A- 4 039 607
- US-A- 4 054 366
- US-A- 4 083 625
- US-A- 4 291 940
- US-A- 4 362 357
- US-A- 4 367 013
- US-A- 4 384 038
- US-A- 4 449 783
- US-A- 4 484 794
- US-A- 4 533 208
- US-A- 4 560 247
- US-A- 4 566 753
- US-A- 4 590 619
- US-A- 4 653 845
- US-A- 4 708 424
- US-A- 4 878 727
- PATENT ABSTRACTS OF JAPAN vol. 9, no. 329 (P-416)(2052) 24 December 1985 ; & JP-A-60 156 021
- APPLIED PHYSICS LETTERS, vol. 26, no. 7, 1 April 1975, pp. 386-388; T. OZEKI et al.: "Tapered section of multimode cladded fibers as mode filters and mode analyzers"
- APPLIED PHYSICS LETTERS, vol. 28, no. 9, 1 May 1976, pp. 528-529; T. OZEKI et al.: "Optical directional coupler using tapered sections in multimode fibers"
- PROCEEDINGS OF THE IEEE, 1 June 1976, pp. 1013-1014; Y. YAMAMOTO et al.: "A large-tolerant single-mode optical fiber coupler with a tapered structure"
- APPLIED OPTICS, vol. 15, no. 11, 1 November 1976, pp. 2629-2630; M.K. BARNOSKI et al.: "Fabrication of an access coupler with single-strand multimode fiber waveguides"
- APPLIED OPTICS, vol. 15, no. 11, 1 November 1976, pp. 2631-2632; D. CASASENT et al.: "Adaptive photodichroic matched spatial filter"
- PATENT ABSTRACTS OF JAPAN, vol. 9, no. 151 (P-367)(1874), 26 June 1985 ; & JP-A-60 29 710

## Description

### BACKGROUND OF THE INVENTION

The present invention is directed to star-couplers in which a plurality of optical fibers are connected together. The invention is also directed to methods for making the couplers.

Data transmission over optical fibers offers many significant advantages compared with metallic conductors, including: long distance transmission without the need for repeaters, immunity from electromagnetic interference, cross-talk and ground loop, high bandwidth capabilities, small size and weight, high degree of intercept security and dielectric isolation, and long term cost reduction. These desirable features of optical fibers have strongly stimulated efforts both in fiber optics and in supporting technologies such as fiber optic coupling.

Fiber optic couplers provide for feeding and tapping of optical energy. Fiber optic couplers are widely used in multi-terminal communication systems and data buses. In these applications, a common optical path provides communication among a plurality of terminals. Typically, each terminal communicates to every other terminal and provides information on a time shared basis. The effectiveness of such systems depends on characteristics of the optical fibers themselves as well as on the coupling devices employed to share and distribute information.

A star-coupler is a device which distributes the power on any one of several incoming channels to every one of its outgoing channels. Star-couplers are intended to have minimal insertion losses and a substantially uniform power distribution over the outgoing channels. Thus, a system employing a star-coupler and a plurality of terminals represents a parallel distribution system.

Star couplers are particularly useful in the field of optical communications for coupling together a plurality of optic fibers to form a network. Several different starcouplers are known. In general, the couplers have a plurality of incoming channels, a plurality of outgoing channels and a mixing zone which couples optical signals from any one of the incoming channels to all of the outgoing channels. The mixing zone may comprise optic fibers which are tapered and fused together or wave guides in solid blocks of glass. These glass blocks usually have wave guides specially prepared by ion exchange processes or otherwise, and the fibers are aligned with the wave guides. The incoming and outgoing channels are typically bundles of optical fibers. Information in the form of light pulses as signals from any single optical fiber of the input fiber optic bundle is transmitted via the coupler to each of the optical fibers in the output fiber optic bundle.

Illustrative patents describing these structures include U.S. Patents 4,291,940, 4,362,357, 4,449,783, 4,484,794, 4,590,619 and 4,653,845.

Further star-couplers are shown in JP-A-58-149 008, JP-A-60-29 710 and their corresponding abstracts.

Unfortunately, the above-mentioned type of star-couplers are generally costly and difficult to construct.

### SUMMARY OF THE INVENTION

We have devised a star-coupler that is made by injection molding techniques using optical plastics such as those used in optical fiber technology. In accordance with our invention which is defined in claims 1 and 11, the coupler comprises a block of plastic or other suitable material that is injection molded to form input and output connectors. The core is made of a material having an index of refraction that is higher than that of the block. Advantageously, the core is made of pure polymethylmethacrylate (PMMA) and the cladding is made of fluorinated PMMA. Because the coupler is made by molding techniques, fabrication costs are relatively low compared to those of conventional star-couplers.

The input and output connectors are defined in the injection molding process to have a shape which facilitates their connection to conventional optic fibers and connectors. As a result, the star-coupler can readily be connected to the fibers which it is to couple.

The coupler is injection molded following any one of a number of techniques. For example, the coupler can be formed by injection molding a bottom half and a top half with a material that has a refractive index similar to that of the cladding. Channels are defined in the bottom and/or top halves for receiving the core material, the two halves are fitted together with the channels forming a cavity therebetween and then the core material is injection molded into the cavity defined between the cladding halves.

### BRIEF DESCRIPTION OF THE DRAWINGS

These and other objects, features and advantages of the invention will become more readily apparent from the following detailed description of a preferred embodiment of the invention in which:
Fig. 1 is a schematic illustration of a 4 x 4 star-coupler of the present invention;
Fig. 2 is a schematic illustration of a second embodiment of a 4 x 4 star-coupler of the present invention;
Fig. 3 is a schematic illustration of a third embodiment of a 4 x 4 star-coupler of the present invention;
Fig. 4 is a perspective view of the top and bottom halves of the cladding of the injection molded coupler of Fig. 1;
Fig. 5 is a modified cross-sectional view along line 5-5 of Fig. 4; and
Fig. 6 is a perspective view of a portion of the injection molded coupler of Fig. 1.

### DETAILED DESCRIPTION OF THE INVENTION

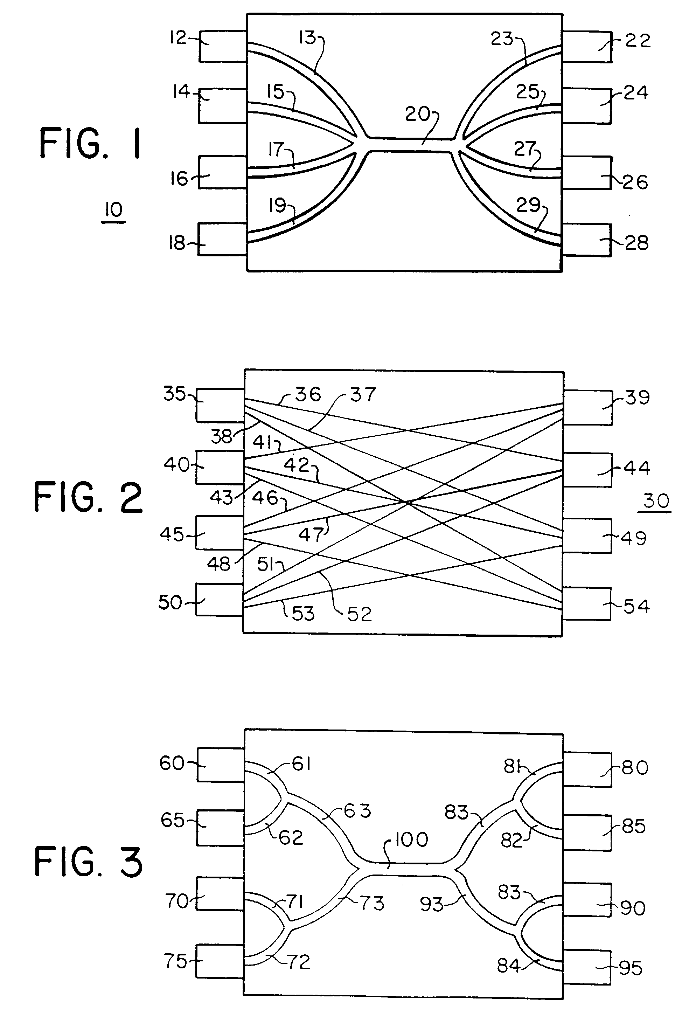

As shown schematically in Fig. 1, an illustrative embodiment of the invention comprises four input ports 12, 14, 16, 18, a mixing channel or zone 20 and four output ports 22, 24, 26, 28. Input ports 12, 14, 16, 18 are connected to mixing zone 20 by channels 13, 15, 17, 19, respectively. Mixing zone 20 is connected to ports 22, 24, 26, 28 by channels 23, 25, 27, 29, respectively.

These channels and the mixing zone propagate optical signals. Thus, light input to any of the input ports will be transmitted to mixing element 20 where it is then distributed to all of the output ports. For example, light input at input port 12 is transmitted by channel 13 to mixing zone 20. Mixing zone 20 then distributes the light from port 12 to each of output ports 22, 24, 26, 28 along channels 23, 25, 27, 29, respectively. Illustratively, ports 12, 22 are corresponding input and output ports, i.e., they are each connected to the same terminal or data communications device. Similarly, ports 14, 24, ports, 16, 26 and ports 18, 28 are each connected to the same device. In Fig. 1, as in all of the figures, the channels are schematically depicted and are not drawn to scale.

Referring now to Fig. 2, there is schematically depicted a further embodiment of a 4 x 4 star-coupler. This particular embodiment comprises input ports 35, 40, 45, 50 and output ports 39, 44, 49, 54 which are located opposite ports 35, 40, 45, 50, respectively. Input port 35 and output port 39 are preferably connected to the same terminal or device. Similarly, ports 40, 44, ports 45, 49 and ports 50, 54 are each connected to the same terminal or device. Each of the input ports is provided with a separate channel to each of the output ports, except the corresponding output port connected to the same device, illustratively, the output port directly opposite that input port. For example, input port 35 is provided with channel 36 to output port 44, channel 37 to output port 49 and channel 38 to output port 54. In this embodiment, input port 35 is not provided with a channel to its opposite corresponding output port, namely, port 39.

Advantageously, such a configuration wherein a star-coupler's input and output ports are not coupled to each other eliminates the echo encountered in conventional passive star-couplers.

Fig. 3 is a schematic illustration of another embodiment of the invention comprising input ports 60, 65, 70, 75 and output ports 80, 85, 90, 95. As in the embodiment of Fig. 1, light from any input port is provided to all of the output ports. In this embodiment, a binary tree network connects all input ports to a mixing channel and a second binary tree network connects the mixing channel to all output ports. Specifically, light from input port 60 enters channel 61, then channel 63 and then channel 100. From channel 100, the light is distributed to channels 83 and 93. From channel 83, the light is distributed to channels 81, 82 which are coupled to ports 80, 85, respectively. Similarly, from channel 93, the light is distributed to channels 91, 92 which are coupled to ports 90, 95, respectively. Light input to any of input ports 65, 70, 75 is similarly provided to all of the output ports 80, 85, 90, 95.

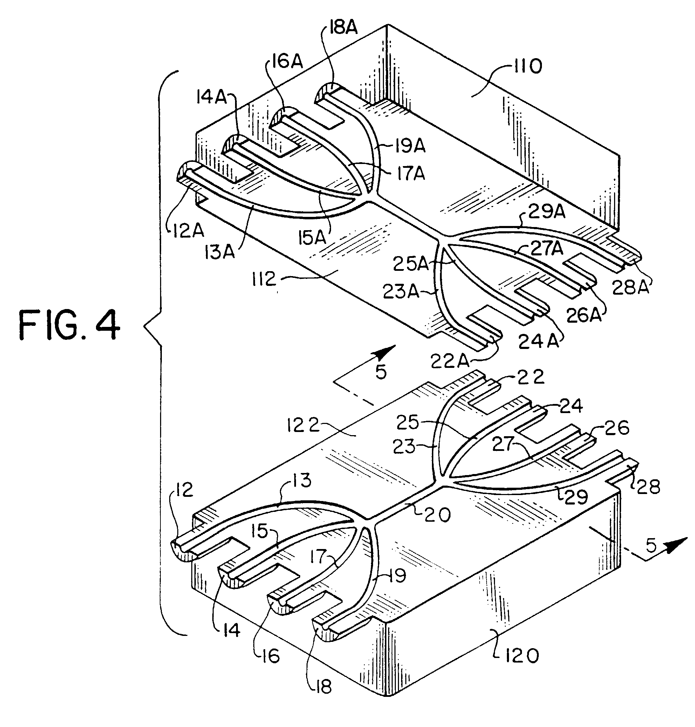

Referring now to Fig. 4, there is depicted a perspective view of the device schematically illustrated in Fig. 1. This 4 x 4 star-coupler comprises a first section 110 and a mating second section 120. Illustratively, these sections are mirror images of each other and each forms one half of the star-coupler.

Each of sections 110 and 120 is fabricated by injection molding and comprises a block-like structure having a planar face 112, 122, respectively. A network of channels, preferably semicircular in shape, is formed in each of these faces 112, 122. The configuration of this network has been described in conjunction with Fig. 1.

Attachment of section 110 to section 120 thus provides a network of circular channels in which each input port is connected to all of the output ports. Each input port and each output port is formed by two port portions, for example 12 and 12A.

Sections 110, 120 are each constructed from a suitable plastic optic cladding material. Further, the entire network of channels is filled with a suitable fiber optic core material prior to attachment of section 110 to section 120. Application of force (by means not shown) to the sections will cause excess core material to be expelled from between the sections. Alternatively, sections 110, 120 may first be joined together and then core material injected into the ports to entirely fill the channels. The cladding material has a lower index of refraction than the core material. Thus, light is propagated in the core material and guided and confined therein by the cladding material.

A suitable material for the cladding is fluorinated polymethylmethacrylate (PMMA) while a suitable material for the core is pure PMMA.

The input and output ports are formed during injection molding and are appropriately aligned with respect to the channel(s) to which they are attached. These ports are adapted to be easily connected to known connectors and preferably do not require further machining. The particular shape and configuration of the ports depend on the nature of the connector to which it is to be connected.

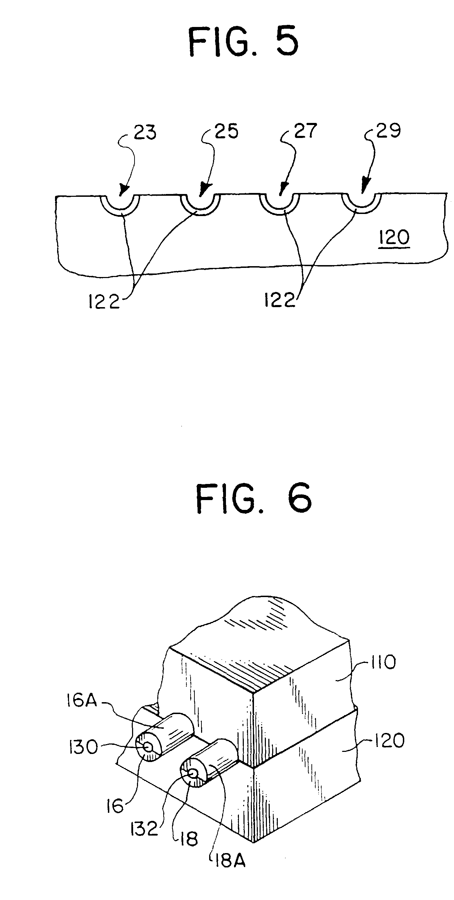

In an alternative embodiment from that of Fig. 4, sections 110, 120 are constructed from practically any material which can be injection molded. Fig. 5 illustrates such an embodiment in the form of a modified cross-sectional view of Fig. 4. In this embodiment, a suitable cladding material 122 is applied to the surfaces of section 120 defining channels 23, 25, 27, 29 therein. Core material is then placed within the channels as discussed in conjunction with the description of Fig. 4.

Fig. 6 illustrates a portion of a star-coupler assembled in accordance with the invention. Specifically, a first input port comprises halves 16, 16A and core 130 while a second input port comprises halves 18, 18A and core 132.

While it is apparent that the invention herein disclosed is well calculated to fulfill the objects stated above, it will be appreciated that numerous modifications and embodiments may be devised by those skilled in the art. The appended claims define the scope of the present invention.

Specifically, a one-piece structure having a suitable network of channels can be formed by injection molding. Furthermore, the two mating halves which form a star-coupler need not be mirror images of each other, for example, one may contain a channel of more than half of the cross-sectional area of the resultant channel and the other may contain less than half of the cross-sectional area or none of the resultant channel. The channel may be non-circular. For example, for ease of molding operation, the channel can be a rectangular or square-walled channel with a slight taper for mold release and so on. Moreover, the invention is not limited to the disclosed 4 x 4 star-couplers, but may be practiced with star-couplers having any practical number of ports. Additionally, injection molded fiber optic connectors may be provided to simply connect together two optical fibers and not interconnect various ports and channels as in a conventional star-coupler.

## Claims

1. An injection molded star-coupler comprising:
an injection molded block (10) having a plurality of channels (13,15,17,19,23,25,27,29) therein, said channels ending at front and rear facets of the block,
a core material for transmitting optical signals, said core material having an index of refraction greater than that of the material forming the block, said core material filling said channels in said block so that light is guided and confined therein,
characterised in that said channels form an NxN star coupler,
in that a plurality of injection molded input connectors (12,14,16,18) for inputting optical signals is provided, said input connectors being formed by integral protrusions from the front facet of the block each surrounding an end portion of a channel, and
in that a plurality of injection molded output connectors (22,24,26,28) for outputting optical signals is provided, said output connectors being formed by integral protrusions from the rear facet of the block each surrounding an end portion of a channel.

2. The injection molded star-coupler of claim 1 wherein said core material is polymethylmethacrylate, ie PMMA, and said cladding material is fluorinated PMMA.

3. The injection molded star-coupler of claim 1 wherein a layer of cladding material having an index of refraction lower than the index of refraction of said core material is disposed on surfaces of said block defining said channels in said block so as to form a cladding structure surrounding said core material.

4. The injection molded star-coupler of claim 3 wherein said core material is polymethylmethacrylate, ie PMMA and said cladding material is fluorinated PMMA.

5. The injection molded star-coupler of claim 1 wherein said plurality of channels in said block comprises a mixing channel (20), a channel from each of said input connectors to said mixing channel, and a channel from said mixing channel to each of said output connectors.

6. The injection molded star-coupler of claim 1 wherein said plurality of channels in said block comprises a channel from each said input connector to each said output connector.

7. The injection molded star-coupler of claim 1 wherein said plurality of channels in said block comprises a channel from each said input connector to each said output connector except that a channel is not provided from each said input connector to its corresponding output connector connected to the same communications device.

8. The injection molded star-coupler of claim 1 wherein said plurality of channels in said block comprises a first binary tree network connecting all said input connectors to a mixing channel (20;100) and a secondary binary tree network connecting said mixing channel (20;100) to all said output connectors.

9. The injection molded star-coupler of claim 1 wherein said plurality of channels have a circular cross-section.

10. The injection molded star-coupler of claim 1 wherein said plurality of channels have a non-circular cross-section.

11. An injection molded star-coupler comprising:
a first injection molded upper section (110) having a plurality of channels (13A, 15A, 17A, 19A, 23A, 25A, 27A, 29A) therein including a mixing zone (20), said channels ending at front and rear facets of the section,
a second injection molded section (120) having a corresponding plurality of channels (13B, 15B, 17B, 19B, 23B, 25B, 27B, 29B) therein including a mixing zone (20), said channels ending at front and rear facets of the section,
a core material for transmitting optical signals, said core material having an index of refraction greater than that of the material forming the sections, said core material filing said channels in said first and second sections so that light is guided and confined therein, characterised in that
a plurality of injection molded input connector portions (12A, 14A, 16A, 18A, 12B, 14B, 16B, 18B) is provided, each of said input portions being formed by integral protrusions from the front facet of the section in which it is molded and surrounding an end portion of a channel,
in that a plurality of injection molded output connector portions (22A, 24A, 26A, 28A, 22B, 24B, 26B, 28B) is provided, each of said output portions being formed by integral protrusions from the rear facet of the section in which it is molded and surrounding an end portion of a channel, and
in that said plurality of channels and connector portions in said first upper section (110) mate with said plurality of channel and connector portions in said second lower section (120) to form a corresponding plurality of channels and connectors, said channels connecting each of said input connectors with at least one of said output connectors to form an NxN star coupler.

12. The injection molded star-coupler of claim 11 wherein said core material is polymethylmethacrylate, ie PMMA, and said cladding material of said first and second section is fluorinated PMMA.

13. The injection molded star-coupler of claim 11 wherein a layer of cladding material having an index of refraction lower than the index of refraction of said core material is disposed on surfaces of said first (11) and said second (120) sections defining said channels so as to form a cladding structure surrounding said core material, whereby optical signals are confined and guided within said core material.

14. The injection molded star-coupler of claim 13 wherein said core material is polymethylmethacrylate, ie PMMA and said cladding material is fluorinated PMMA.

15. The injection molded star-coupler of claim 11 wherein said plurality of channels in each of said first (110) and second (120) sections comprises a mixing channel (20), a channel from each of said input connector portions to said mixing channel, and a channel from said mixing channel to each of said output connector portions.

16. The injection molded star-coupler of claim 11 wherein said plurality of channels in each of said first (110) and second (120) sections comprises a channel from each of said input connector portions to each of said output connector portions.

17. The injection molded star-coupler of claim 11 wherein said plurality of channels in each of said first (110) and second (120) sections comprises a channel from each of said input connector portions to each of said output connector portions except that a channel is not provided from each said input connector portion to its corresponding output connector portion that is connected to the same communications device.

18. The injection molded star-coupler of claim 11 wherein said plurality of channels in each of said first (110) and second (120) sections comprises a first binary tree network connecting all said input connector portions (60,65,70,75) to a mixing channel and a second binary tree network connecting said mixing channel to all said output connector portions (80,85,90,95).

19. The injection molded star-coupler of claim 11 wherein said corresponding plurality of channels which connect each of said input connector portions with at least one of said output connector portions having a circular cross-section.

20. The injection molded star-coupler of claim 11 wherein said corresponding plurality of channels which connect each of said input connector portions with at least one of said output connector portions have a non-circular cross-section.

21. A method of constructing a star-coupler comprising the steps of:
forming by injection molding a first section (110) and a second section (120) each having a plurality of channels therein including a mixing zone (20,100), a plurality of input connector portions and a plurality of output connector portions, each of said input and output connector portions being adapted for connection to a mating fiber optic connector, being connected to at east one of said channels, and being formed by integral protrusions from the section in which it is molded, each protrusion comprising an end portion of a channel; and said channels, input connector portions and output connector portions of said second section being configured so as to align and mate with said channels, input connector portions and output connector portions of said first section;
filling said plurality of channels in each of said first and second sections with a core material for transmitting optical signals said core material having an index of refraction greater than that of the material forming the sections;
fastening said first section to said second section so as to align said channels and said connector portions of said first section with said channels and said connector portions of said second section, thus forming a corresponding plurality of channels and connectors to form an NxN star coupler,
wherein said step of filling may occur prior or subsequent to said step of fastening.

22. The method of claim 21 further comprising disposing a fiber optic cladding material on said channels before said step of filling said channels with said core material so as to form a cladding structure having a circular cross section surrounding said core material, thereby confining and guiding optical signals transmitted within said core material.

23. The method of claim 21 wherein said filling step comprises injecting said core material into said channels of said star-coupler after said step of fastening.

24. The method of claim 21 wherein said filling step comprises placing said core material in said plurality of channels in said first section and separately placing said core material in said plurality of channels in said second section before said step of fastening.

## Patentansprüche

1. Spritzgegossener Sternkoppler, der aufweist:
einen spritzgegossenen Block (10) mit mehreren darin ausgebildeten Kanälen (13, 15, 17, 19, 23, 25, 27, 29), die an vorderen und hinteren Begrenzungsflächen des Blocks enden;
ein Kernmaterial zum Übertragen optischer Signale, wobei das Kernmaterial einen höheren Brechungsindex aufweist als das Material, aus dem der Block besteht. wobei das Kernmaterial die Kanäle in dem Block ausfüllt, so daß darin Licht geleitet und eingeschlossen wird:
dadurch gekennzeichnet, daß die Kanäle einen NxN-Sternkoppler bilden;
daß mehrere spritzgegossene Eingangsverbinder (12, 14, 16, 18) zur Eingabe optischer Signale vorgesehen sind, wobei die Eingangsverbinder durch integrierte Vorsprünge an der vorderen Begrenzungsfläche des Blocks gebildet werden, die jeweils einen Endabschnitt eines Kanals umgeben; und
daß mehrere spritzgegossene Ausgangsverbinder (22, 24, 26, 28) zur Ausgabe optischer Signale vorgesehen sind. wobei die Ausgangsverbinder durch integrierte Vorsprünge an der hinteren Begrenzungsfläche des Blocks gebildet werden, die jeweils einen Endabschnitt eines Kanals umgeben.

2. Spritzgegossener Sternkoppler nach Anspruch 1, wobei das Kernmaterial Polymethylmethacrylat, d. h. PMMA, und das Hüllmaterial fluoriertes PMMA ist.

3. Spritzgegossener Sternkoppler nach Anspruch 1, wobei eine Hüllmaterialschicht mit einem niedrigeren Brechungsindex als dem des Kernmaterials an Blockoberflächen angeordnet ist, welche die Kanäle in dem Block begrenzen, um eine das Kernmaterial umgebende Hüllstruktur zu bilden.

4. Spritzgegossener Sternkoppler nach Anspruch 3, wobei das Kernmaterial Polymethylmethacrylat, d. h. PMMA, und das Hüllmaterial fluoriertes PMMA ist.

5. Spritzgegossener Sternkoppler nach Anspruch 1. wobei die mehreren Kanäle in dem Block einen Mischkanal (20). einen Kanal von jedem der Eingangsverbinder zum Mischkanal und einen Kanal vom Mischkanal zu jedem der Ausgangsverbinder aufweisen.

6. Spritzgegossener Sternkoppler nach Anspruch 1, wobei die mehreren Kanäle in dem Block einen Kanal von jedem Eingangsverbinder zu jedem Ausgangsverbinder aufweisen.

7. Spritzgegossener Sternkoppler nach Anspruch 1, wobei die mehreren Kanäle in dem Block einen Kanal von jedem Eingangsverbinder zu jedem Ausgangsverbinder aufweisen, außer daß ein Kanal von jedem Eingangsverbinder zum entsprechenden, mit der gleichen Kommunikationseinrichtung verbundenen Ausgangsverbinder nicht vorgesehen ist.

8. Spritzgegossener Sternkoppler nach Anspruch 1, wobei die mehreren Kanäle in dem Block ein erstes Netzwerk in Form eines binären Baums, das alle Eingangsverbinder mit einem Mischkanal (20: 100) verbindet, und ein zweites Netzwerk in Form eines binären Baums aufweisen, das den Mischkanal (20; 100) mit allen Ausgangsverbindern verbindet.

9. Spritzgegossener Sternkoppler nach Anspruch 1, wobei die mehreren Kanäle einen kreisförmigen Querschnitt aufweisen.

10. Spritzgegossener Sternkoppler nach Anspruch 1, wobei die mehreren Kanäle einen nicht kreisförmigen Querschnitt aufweisen.

11. Spritzgegossener Sternkoppler. der aufweist:
einen ersten spritzgegossenen oberen Abschnitt (110) mit mehreren darin ausgebildeten Kanälen (13A, 15A, 17A, 19A, 23A, 25A. 27A, 29A) einschließlich einer Mischzone (20). wobei die Kanäle an vorderen und hinteren Begrenzungsflächen des Abschnitts enden;
einen zweiten spritzgegossenen Abschnitt (120) mit mehreren entsprechenden, darin ausgebildeten Kanälen (13B, 15B, 17B, 19B, 23B, 25B, 27B, 29B) einschließlich einer Mischzone (20). wobei die Kanäle an vorderen und hinteren Begrenzungsflächen des Abschnitts enden;
ein Kernmaterial zum Übertragen optischer Signale, wobei das Kernmaterial einen höheren Brechungsindex aufweist als das Material, aus dem die Abschnitte bestehen, wobei das Kernmaterial die Kanäle in den ersten und zweiten Abschnitten ausfüllt, so daß darin Licht geleitet und eingeschlossen wird;
dadurch gekennzeichnet,
daß mehrere spritzgegossene Eingangsverbinderabschnitte (12A, 14A, 16A, 18A, 12B. 14B, 16B, 18B) vorgesehen sind, wobei jeder der Eingangsabschnitte durch integrierte Vorsprünge an der vorderen Begrenzungsfläche des Abschnitts gebildet wird, in dem er geformt ist, und einen Endabschnitt eines Kanals umgibt;
daß mehrere spritzgegossene Ausgangsverbinderabschnitte (22A, 24A, 26A, 28A, 22B, 24B, 26B. 28B) vorgesehen sind, wobei jeder der Ausgangsabschnitte durch integrierte Vorsprünge an der hinteren Begrenzungsfläche des Abschnitts gebildet wird, in dem er geformt ist, und einen Endabschnitt eines Kanals umgibt; und
daß die mehreren Kanäle und Verbinderabschnitte in dem ersten, oberen Abschnitt (110) zu den mehreren Kanälen und Verbinderabschnitten in dem zweiten, unteren Abschnitt (120) passen und mehrere entsprechende Kanäle und Verbinder bilden, wobei die Kanäle jeden der Eingangsverbinder mit mindestens einem der Ausgangsverbinder verbinden und einen NxN-Sternkoppler bilden.

12. Spritzgegossener Sternkoppler nach Anspruch 11, wobei das Kernmaterial Polymethylmethacrylat, d. h. PMMA, und das Hüllmaterial der ersten und zweiten Abschnitte fluoriertes PMMA ist.

13. Spritzgegossener Sternkoppler nach Anspruch 11, wobei eine Hüllmaterialschicht mit einem niedrigeren Brechungsindex als dem des Kernmaterials an Oberflächen der ersten (11) und zweiten (12) Abschnitte angeordnet ist, welche die Kanäle begrenzen, um eine das Kernmaterial umgebende Hüllstruktur zu bilden, wodurch optische Signale in dem Kernmaterial eingeschlossen und geleitet werden.

14. Spritzgegossener Sternkoppler nach Anspruch 13, wobei das Kernmaterial Polymethylmethacrylat, d. h. PMMA, und das Hüllmaterial fluoriertes PMMA ist.

15. Spritzgegossener Sternkoppler nach Anspruch 11, wobei die mehreren Kanäle in jedem der ersten (110) und zweiten (120) Abschnitte einen Mischkanal (20), einen Kanal von jedem der Eingangsverbinderabschnitte zum Mischkanal und einen Kanal vom Mischkanal zu jedem der Ausgangsverbinderabschnitte aufweisen.

16. Spritzgegossener Sternkoppler nach Anspruch 11, wobei die mehreren Kanäle in jedem der ersten (110) und zweiten (120) Abschnitte einen Kanal von jedem Eingangsverbinderabschnitt zu jedem Ausgangsverbinderabschnitt aufweisen.

17. Spritzgegossener Sternkoppler nach Anspruch 11, wobei die mehreren Kanäle in jedem der ersten (110) und zweiten (120) Abschnitte einen Kanal von jedem der Eingangsverbinderabschnitte zu jedem der Ausgangsverbinderabschnitte aufweisen, außer daß ein Kanal von jedem Eingangsverbinderabschnitt zum entsprechenden, mit der gleichen Kommunikationseinrichtung verbundenen Ausgangsverbinderabschnitt nicht vorgesehen ist.

18. Spritzgegossener Sternkoppler nach Anspruch 11, wobei die mehreren Kanäle in jedem der ersten (110) und zweiten (120) Abschnitte ein erstes Netzwerk in Form eines binären Baums, das alle Eingangsverbinderabschnitte (60, 65, 70, 75) mit einem Mischkanal verbindet, und ein zweites Netzwerk in Form eines binären Baums aufweisen, das den Mischkanal mit allen Ausgangsverbinderabschnitten (80, 85, 90, 95) verbindet.

19. Spritzgegossener Sternkoppler nach Anspruch 11, wobei die entsprechenden mehreren Kanäle, die jeden der Eingangsverbinderabschnitte mit mindestens einem der Ausgangsverbinderabschnitte verbinden, einen kreisförmigen Querschnitt aufweisen.

20. Spritzgegossener Sternkoppler nach Anspruch 11, wobei die entsprechenden mehreren Kanäle, die jeden der Eingangsverbinderabschnitte mit mindestens einem der Ausgangsverbinderabschnitte verbinden, einen nicht kreisförmigen Querschnitt aufweisen.

21. Verfahren zur Herstellung eines Sternkopplers, mit den folgenden Schritten:
Spritzgießen eines ersten Abschnitts (110) und eines zweiten Abschnitts (120) mit jeweils mehreren darin ausgebildeten Kanälen einschließlich einer Mischzone (20, 100), mehreren Eingangsverbinderabschnitten und mehreren Ausgangsverbinderabschnitten, wobei jeder der Eingangs- und Ausgangsverbinderabschnitte für den Anschluß an einen passenden faseroptischen Verbinder eingerichtet, mit mindestens einem der Kanäle verbunden ist und durch integrierte Vorsprünge an dem Abschnitt gebildet wird, in dem er geformt ist; wobei jeder Vorsprung einen Endabschnitt eines Kanals aufweist; und wobei die Kanäle, Eingangsverbinderabschnitte und Ausgangsverbinderabschnitte des zweiten Abschnitts so gestaltet sind, daß sie auf die Kanäle, Eingangsverbinderabschnitte und Ausgangsverbinderabschnitte des ersten Abschnitts ausgerichtet und daran angepaßt sind;
Ausfüllen der mehreren Kanäle in jedem der ersten und zweiten Abschnitte mit einem Kernmaterial zur Übertragung optischer Signale, wobei das Kernmaterial einen höheren Brechungsindex als den des Materials aufweist, aus dem die Abschnitte bestehen;
Befestigen des ersten Abschnitts an dem zweiten Abschnitt, so daß die Kanäle und Verbinderabschnitte des ersten Abschnitts auf die Kanäle und Verbinderabschnitte des zweiten Abschnitts ausgerichtet werden, wodurch eine entsprechende Gruppe von Kanälen und Verbindern zur Bildung eines NxN-Sternkopplers entsteht:
wobei der Ausfüllschritt vor oder nach dem Befestigungsschritt erfolgen kann.

22. Verfahren nach Anspruch 21, das ferner einen Schritt zum Anordnen eines faseroptischen Hüllmaterials an den Kanälen vor dem Schritt zum Ausfüllen der Kanäle mit dem Kernmaterial aufweist, um eine Hüllstruktur mit kreisförmigem Querschnitt zu bilden, die das Kernmaterial umgibt, wodurch optische Signale innerhalb des Kernmaterials eingeschlossen und geleitet werden.

23. Verfahren nach Anspruch 21, wobei der Ausfüllschritt das Einspritzen des Kernmaterials in die Kanäle des Sternkopplers nach dem Befestigungsschritt aufweist.

24. Verfahren nach Anspruch 21, wobei der Ausfüllschritt das Einbringen des Kernmaterials in die mehreren Kanäle in dem ersten Abschnitt und das separate Einbringen des Kernmaterials in die mehreren Kanäle im zweiten Abschnitt vor dem Befestigungsschritt aufweist.

## Revendications

1. Coupleur en étoile moulé par injection, comprenant:
un bloc moulé par injection (10) ayant plusieurs canaux (13, 15, 17, 19, 23, 25, 27, 29) dans celui-ci, lesdits canaux se terminant aux faces avant et arrière du bloc,
un matériau d'âme pour transmettre des signaux optiques, ledit matériau d'âme ayant un indice de réfraction supérieur à celui du matériau formant le bloc, ledit matériau d'âme remplissant lesdits canaux dans ledit bloc, de façon que la lumière soit guidée et confinée dans ceux-ci.
caractérisé en ce que lesdits canaux forment un coupleur en étoile NxN,
en ce qu'il est prévu plusieurs connecteurs d'entrée moulés par injection (12, 14, 16, 18) destinés à introduire des signaux optiques. lesdits connecteurs d'entrée étant formés par de saillies d'une pièce partant de la face avant du bloc et entourant chacune une partie terminale d'un canal, et
en ce qu'il est prévu plusieurs connecteurs de sortie moulés par injection (22, 24, 26, 28) destinés à fournir des signaux optiques, lesdits connecteurs de sortie étant formés de saillies d'une pièce partant de la face arrière du bloc et entourant chacune une partie terminale d'un canal.

2. Coupleur en étoile moulé par injection selon la revendication 1, dans lequel ledit matériau d'âme est le polyméthacrylate de méthyle (PMMA) et le matériau de recouvrement est le PMMA fluoré.

3. Coupleur en étoile moulé par injection selon la revendication 1 dans lequel une couche de matériau de recouvrement ayant un indice de réfraction inférieur à l'indice de réfraction dudit matériau d'âme est disposé sur les surfaces dudit bloc formant lesdits canaux dans ledit bloc, de manière à former une structure de recouvrement entourant ledit matériau d'âme.

4. Coupleur en étoile moulé par injection selon la revendication 3, dans lequel ledit matériau d'âme est du polyméthacrylate de méthyle (PMMA) et ledit matériau de recouvrement est le PMMA fluoré.

5. Coupleur en étoile moulé par injection selon la revendication 1, dans lequel lesdits plusieurs canaux dans ledit bloc comprennent un canal de mélange (20), un canal partant de chacun desdits connecteurs d'entrée vers ledit canal de mélange et un canal partant dudit canal de mélange vers chacun desdits connecteurs de sortie.

6. Coupleur en étoile moulé par injection selon la revendication 1, dans lequel lesdits plusieurs canaux dans ledit bloc comprennent un canal partant de chaque connecteur d'entrée vers chacun desdits connecteurs de sortie.

7. Coupleur en étoile moulé par injection selon la revendication 1, dans lequel lesdits plusieurs canaux dans ledit bloc comprennent un canal partant de chacun desdits connecteurs d'entrée vers chacun desdits connecteurs de sortie, sauf qu'un canal n'est pas prévu depuis chaque connecteur d'entrée vers son connecteur de sortie correspondant connecté au même dispositif de communication.

8. Coupleur en étoile moulé par injection selon la revendication 1, dans lequel lesdits canaux dans ledit bloc comprennent un premier réseau non maillé binaire, connectant tous lesdits connecteurs d'entrée à un canal de mélange (20; 100) et un réseau non maillé binaire secondaire, connectant ledit canal de mélange (20; 100) à tous lesdits connecteurs de sortie.

9. Coupleur en étoile moulé par injection selon la revendication 1, dans lequel lesdits plusieurs canaux ont une section transversale circulaire.

10. Connecteur en étoile moulé par injection selon la revendication 1, dans lequel lesdits plusieurs canaux ont une section transversale non circulaire.

11. Coupleur en étoile moulé par injection comprenant:
une première section supérieure moulée par injection (110) ayant plusieurs canaux (13A, 15A, 17A, 19A, 23A, 25A, 27A, 29A) dans celle-ci, comprenant une zone de mélange (20), lesdits canaux se terminant aux faces avant et arrière de la section,
une deuxième section moulée par injection (120) ayant plusieurs canaux correspondants (13B. 15B, 17B, 19B, 23B, 25B, 27B, 29B) dans celle-ci, comprenant une zone de mélange (20), lesdits canaux se terminant aux faces avant et arrière de la section,
un matériau d'âme pour transmettre des signaux optiques, ledit matériau d'âme ayant un indice de réfraction supérieur à celui du matériau formant les sections, ledit matériau d'âme remplissant lesdits canaux dans lesdites première et deuxième section, de façon que la lumière soit guidée et confinée dans ceux-ci,
caractérisé en ce que:
il est prévu plusieurs parties du connecteur d'entrée moulé par injection (12A, 14A, 16A, 18A, 12B, 14B, 16B, 18B), chacune desdites parties d'entrée étant formée de saillies d'une pièce partant de la face avant de la section dans laquelle elle est moulée et entourant une partie terminale d'un canal,
en ce qu'il est prévu plusieurs parties du connecteur de sortie moulé par injection (22A, 24A, 26A, 28A, 22B, 24B, 26B, 28B), chacune desdites parties de sortie étant formée de saillies d'une pièce partant de la face arrière de la section dans laquelle elle est moulée et entourant une partie terminale d'un canal, et
en ce que lesdits plusieurs canaux et lesdites parties du connecteur dans ladite première partie supérieure (110) correspondent auxdits plusieurs canaux et parties de connecteur dans ladite deuxième section inférieure (120) pour former un ensemble correspondant de canaux et de connecteurs, lesdits canaux connectant chacun desdits connecteurs d'entrée avec au moins un desdits connecteurs de sortie pour former un coupleur en étoile NxN.

12. Coupleur en étoile moulé par injection selon la revendication 11, dans lequel ledit matériau d'âme est le polyméthacrylate de méthyle (PMMA) et ledit matériau de recouvrement desdits première et deuxième sections est le PMMA fluoré.

13. Coupleur en étoile moulé par injection selon la revendication 11, dans lequel une couche de matériau de recouvrement ayant un indice de réfraction inférieur à l'indice de réfraction dudit matériau d'âme est disposée sur les surfaces desdites première section (110) et deuxième section (120) formant lesdits canaux, de façon à constituer une structure de revêtement entourant ledit matériau d'âme, les signaux optiques étant confinés et guidés dans ledit matériau d'âme.

14. Coupleur en étoile moulé par injection selon la revendication 13, dans lequel ledit matériau d'âme est le polyméthacrylate de méthyle (PMMA) et ledit matériau de recouvrement est le PMMA fluoré.

15. Coupleur en étoile moulé par injection selon la revendication 11, dans lequel lesdits plusieurs canaux dans chacune desdites première section (110) et deuxième section (120) comprennent un canal de mélange (20), un canal partant de chacune desdites parties du connecteur d'entrée vers ledit canal de mélange et un canal partant dudit canal de mélange vers chacune desdites parties du connecteur de sortie.

16. Coupleur en étoile moulé par injection selon la revendication 11. dans lequel lesdits canaux dans chacune desdites première section (110) et deuxième section (120) comprennent un canal partant de chacune desdites parties du connecteur d'entrée vers chacune desdites parties du connecteur de sortie.

17. Coupleur en étoile moulé par injection selon la revendication 11, dans lequel lesdits plusieurs canaux dans chacune desdites première section (110) et deuxième section (120) comprennent un canal partant de chacune desdites parties du connecteur d'entrée vers chacune desdites parties du connecteur de sortie, sauf qu'un canal n'est pas prévu depuis chaque partie de connecteur d'entrée vers la partie de connecteur de sortie correspondante qui est connectée aux mêmes dispositifs de communication.

18. Coupleur en étoile moulé par injection selon la revendication 11, dans lequel lesdits plusieurs canaux dans chacune desdites première section (110) et deuxième section (120) comprennent un premier réseau non maillé binaire connectant toutes lesdites parties du connecteur d'entrée (60, 65, 70, 75) à un canal de mélange et un deuxième réseau non maillé binaire connectant ledit canal de mélange à toutes lesdites parties du connecteur de sortie (80, 85, 90. 95).

19. Coupleur en étoile moulé par injection selon la revendication 11. dans lequel lesdits plusieurs canaux correspondants, connectant chacune desdites parties du connecteur d'entrée à au moins l'une desdites parties du connecteur de sortie, ont une section transversale circulaire.

20. Coupleur en étoile moulé par injection selon la revendication 11, dans lequel lesdits plusieurs canaux correspondants, connectant chacune desdites parties du connecteur d'entrée à au moins l'une desdites parties du connecteur de sortie, ont une section transversale non circulaire.

21. Procédé de fabrication d'un coupleur en étoile qui comprend les étapes suivantes:
former, par moulage par injection, une première section (110) et une deuxième section (120) ayant chacune plusieurs canaux dans celle-ci, comprenant une zone de mélange (20, 100), plusieurs parties de connecteur d'entrée et plusieurs parties du connecteur de sortie, chacune desdites parties des connecteurs d'entrée et de sortie étant adaptée pour être connectée à un connecteur de fibre optique correspondant, en étant connectée à au moins l'un desdits canaux et en étant formée de saillies d'une pièce partant de la section dans laquelle elle est moulée, chaque saillie comprenant une partie terminale d'un canal; et lesdits canaux, les parties de connecteur d'entrée et les parties de connecteur de sortie de ladite deuxième section étant configurés de façon à être alignés et en correspondance avec lesdits canaux, les parties de connecteur d'entrée et les parties de connecteur de sortie de ladite première section:
remplir chacun desdits plusieurs canaux dans chacune desdites première et deuxième section par un matériau d'âme pour transmettre des signaux optiques, ledit matériau d'âme ayant un indice de réfraction supérieur à celui du matériau formant les sections;
fixer ladite première section à ladite deuxième section, de façon à aligner lesdits canaux et lesdites parties de connecteur de ladite première section avec lesdits canaux et lesdites parties de connecteur de ladite deuxième section en formant ainsi plusieurs canaux et connecteurs correspondants, afin de constituer un coupleur en étoile NxN,
dans lequel ladite étape de remplissage peut s'effectuer avant ou après ladite étape de fixation.

22. Procédé selon la revendication 21, comprenant, en outre, le placement d'un matériau de revêtement de fibre optique sur lesdits canaux avant ladite opération de remplissage desdits canaux par ledit matériau d'âme, de façon à former une structure de revêtement ayant une section transversale circulaire entourant ledit matériau d'âme, en confinant et en guidant ainsi les signaux optiques transmis dans ledit matériau d'âme.

23. Procédé selon la revendication 21, dans lequel ladite opération de remplissage comprend l'injection dudit matériau d'âme dans lesdits canaux dudit coupleur en étoile après ladite opération de fixation.

24. Procédé selon la revendication 21, dans lequel ladite opération de remplissage comprend le placement dudit matériau d'âme dans lesdits plusieurs canaux dans ladite première section et le placement séparé dudit matériau d'âme dans lesdits plusieurs canaux dans ladite deuxième section avant ladite opération de fixation.
